Europäisches Patentamt

European Patent Office

Office européen des brevets

(19)

(11) **EP 0 794 514 B1**

(12)

# EUROPEAN PATENT SPECIFICATION

(45) Date of publication and mention
of the grant of the patent:
**04.12.2002 Bulletin 2002/49**

(51) Int Cl.[7]: **G06T 5/40**

(21) Application number: **97301554.8**

(22) Date of filing: **07.03.1997**

(54) **Image enhancing method using mean-separate histogram equalization and a circuit therefor**

Bildverbesserungsverfahren durch Histogramm-Entzerrung mit Mittelwertübereinstimmung und Schaltung dafür

Méthode d'amélioration d'image utilisant l'égalisation d'histogramme avec correspondance de la moyenne et circuit correspondant

(84) Designated Contracting States:
**DE ES GB**

(30) Priority: **09.03.1996 KR 9606219**
**17.04.1996 KR 9611624**

(43) Date of publication of application:
**10.09.1997 Bulletin 1997/37**

(73) Proprietor: **Samsung Electronics Co., Ltd.**
**Suwon-city, Kyungki-do (KR)**

(72) Inventors:
- **Kim, Young-taek**
  **Suwon-City, Kyungki-do (KR)**
- **Cho, Yong-hun**
  **Dongjak-gu, Seoul (KR)**

(74) Representative: **Chugg, David John**
**Appleyard Lees,**
**15 Clare Road**
**Halifax, West Yorkshire HX1 2HY (GB)**

(56) References cited:
**EP-A- 0 516 084          FR-A- 2 726 144**
**US-A- 4 829 381**

- **LESZCZYNSKI ET AL.: 'Digital contrast enhancement for online portal imaging' MEDICAL AND BIOLOGICAL ENGINEERING AND COMPUTING vol. 27, no. 5, September 1989, pages 507 - 512**

## Description

The present invention relates to an image enhancing method using mean-separate histogram equalization (MSHE) and a circuit therefor. More particularly, the present invention relates to an image enhancing method in which a given image is separated into a predetermined number of sub-images based on a mean level of the image and the respective sub-images are histogram-equalized independently, and a circuit therefor.

A histogram of gray levels provides an overall description of the appearance of an image. Properly adjusted gray levels for a given image can enhance the appearance or contrast thereof.

Among the many methods for contrast enhancement, the most widely known one is histogram equalization, in which the contrast of a given image is enhanced according to the sample distribution thereof. The method is disclosed in documents: [1] J.S. Lim, "Two-dimensional Signal and Image Processing," Prentice Hall, Englewood Cliffs, New Jersey, 1990, and [2] R.C. Gonzalez and P. Wints, "Digital Image Processing," Addison-Wesley, Reading, Massachusetts, 1977.

The useful applications of the histogram equalization method for medical image processing and radar image processing are disclosed in documents: [3] J. Zimmerman, S. Pizer, E. Staab, E. Perry, W. McCartney and B. Brenton, "Evaluation of the Effectiveness of Adaptive Histogram Equalization for Contrast Enhancement," IEEE Tr. on Medical Imaging, pp. 304-312, Dec. 1988, and [4] Y. Li, W. Wang and D.Y. Yu, "Application of Adaptive Histogram Equalization to X-ray Chest Image," Proc. of the SPIE, pp. 513-514, vol. 2321, 1994.

A problem with some contrast enhancement methods is that the average brightness may become either too light or too dark. If, for example, the average brightness becomes too light and the brightness displayable on the display device is limited then all the elements of the image above the limit may appear as the maximum brightness. This reduces the information content of the image. A similar situation can be envisaged if the average brightness becomes too dark, when a proportion of the elements of the image below the average level will be darker than the minimum brightness displayable on the display device. European patent number 516 084 discloses a video signal gradation corrector employing histogram equalisation which suppresses excessive alternation of the average brightness by controlling what levels of brightness are included in the histogram.

A number of other techniques for contrast enhancement, including adaptive histogram equalization and moving histogram equalization, are reviewed in the document: K.W. Leszczynski and S. Shalev, "Digital contrast enhancement for online portal imaging", Medical & Biological Engineering & Computing, pp. 507-512, Sep. 1989. This document discusses both global and local contrast enhancement techniques, in which the image can be enhanced as a whole, or divided into position dependent sub-images that are processed separately. The sub-images are related to one another by interpolation between neighbouring to one another by interpolation between neighbouring regions, which can be very computationally intensive.

In general, since histogram equalization causes the dynamic range of an image to be stretched, the density distribution of the resultant image is made flat and the contrast of the image is enhanced as a consequence thereof.

However, such a widely-known feature of the histogram equalization becomes a defect in some practical cases. That is, as the output density of the histogram equalization becomes uniform, the mean brightness of an output image approaches the middle gray level value. Actually, for the histogram equalization of an analog image, the mean brightness of the output image is exactly the middle gray level regardless of the mean brightness of the input image. It is obvious that this feature is not desirable in some real applications. For instance, an image taken at nighttime can appear to be an image taken in the daytime after histogram equalization has been performed. Meanwhile, too dark or too bright image signals result in a low contrast after the equalization.

With a view to solving or reducing the above problems, it is an aim of preferred embodiments of the present invention to provide an image enhancing method in which a given image is separated into a predetermined number of sub-images based on a mean level of the image and the respective sub-images are histogram-equalized independently, so that the mean brightness of the given image is preserved while the contrast of the image is enhanced.

It is another aim of embodiments of the present invention to provide an image enhancing method in which an input image is separated into a predetermined number of sub-images based on a mean level of the image and the respective sub-images are histogram-equalized independently according to a gray level distribution of the sub image and a compensated mean level which results from adding a brightness compensation value to the mean level.

It is yet another aim of embodiments of the present invention to provide an image enhancing method by which a given image is separated into predetermined number of sub-images based on a mean level of the image and the respective sub-images are histogram-equalized independently, so that the mean brightness of the given image is preserved while the contrast of the image is enhanced.

It is still yet another aim of preferred embodiments of the present invention to provide an image enhancing circuit by which an input image is separated into a predetermined number of sub-images based on a mean level of the image and the respective sub-images are histogram-equalized independently according to a gray level distribution of the sub image and a compensated mean level which results from adding a brightness compensation value to the mean level.

According to a first aspect of the invention, there is provided a method for enhancing an image by histogram-equalizing an image signal represented by a predetermined number of gray levels, said method comprising the steps of: (a) calculating a mean value of an input image signal in a picture unit; (b) dividing the input image signal into a predetermined number of sub-images on the basis of a comparison result of the mean level and a gray level of each sample of the input image signal; (c) calculating cumulative density functions for each sub-image; and (d) histogram-equalizing each sub-image independently by mapping each sample of the sub-image into a new gray level on the basis of the cumulative density functions.

Preferably, the input image signal is divided into two sub-images in said step (b).

Said step (d) may comprise the steps of: (d1) mapping the input sample into a gray level of a first range by using a first transform function which is defined by use of one of the cumulative density functions; (d2) mapping the input sample into a gray level of a second range by using a second transform function which is defined by use of another one of the cumulative density functions; (d3) comparing the input sample with the mean level; and (d4) selecting one of two mapped gray levels in said step (d1) and (d2), respectively, according to the result of said step (d3).

There, may further be provided a step (a1) comprising obtaining a gray level distribution of the input image signal in a picture unit; and wherein said step (c) is performed on the basis of the gray level distribution.

The first range in said step (d1) preferably comprises gray levels from a minimum level $X_0$ to a mean level $X_m$ and the second range in said step (d2) preferably comprises gray levels from a gray level next to the mean level $X_{m+1}$ to the maximum level $X_{L-1}$.

A compensated mean level may be obtained by adding a brightness compensation value according to a predetermined correction function based on the mean brightness of the input image to said mean level; and in said step (d) of histogram-equalizing, each sub-image, may be histogram equalized independently by mapping each sample of the sub-image into a new gray level on the basis of the cumulative density functions and the compensated mean level.

The gray level distribution may be divided into two sub-images according to the mean level in said step (b).

Said step (d) may comprise the steps of: (d1) mapping the input sample which is equal to or less than the mean level to a gray level from the minimum level $X_0$ to a compensated mean level $B_m$ according to a corresponding cumulative density function value of the input sample; and (d2) mapping the input image signal which is greater than the mean level to a gray level from $B_m'$ to a maximum gray level $X_{L-1}$ according to a corresponding cumulative density function value of the input sample, wherein $B_m'=B_m+X_{L-1}/(L-1)$.

In obtaining said compensated mean level, the brightness compensation value is preferably greater than zero when the mean level is less than a first threshold, and the brightness compensation value is less than zero when the mean level is greater than a second threshold.

According to a second aspect of the invention, there is provided a circuit for enhancing image by histogram-equalizing an image signal represented by a predetermined number of gray levels, the circuit comprising: first calculating means for calculating a gray level distribution of an input image signal in a picture unit; second calculating means for calculating a mean level of the input image signal in a picture unit; third calculating means for dividing the gray level distribution into a predetermined number of sub-images based on a comparison result of the mean level and a gray level of each example of the input image signal, and calculating cumulative density functions for each sub-image; mapping means for mapping each input sample of each of the sub-images into a plurality of gray levels on the basis of the cumulative density functions; and outputting means for comparing the input sample with the mean level and selecting one of the mapped gray levels output by said mapping means to output the selected level.

A unit of picture is preferably a frame and a predetermined number is two.

Preferably, there is further provided a picture memory for delaying the input image signal by a picture unit and wherein said mapping means maps each input sample of the sub-image output by said picture memory into a plurality of gray levels on the basis of the cumulative density functions.

Said mapping means may be arranged for mapping each input sample of each sub-image into a plurality of gray levels on the basis of the cumulative density functions calculated for the picture just before the current picture.

Said mapping means may comprise: a first mapper for mapping the input sample into a gray level from a minimum level $X_0$ to a mean level $X_m$ by using a first transform function which is defined by use of one of the cumulative density functions; and a second mapper for mapping the input sample into a gray level from a level $X_{m+1}$ next to the mean level to a maximum level $X_{L-1}$ by using a second transform function which is defined by use of the other one of the cumulative density functions.

Said outputting means may comprise: a comparator for comparing the input sample with the mean level to output a selection control signal; and a selector for selecting one of the output levels from said first and second mappers according to the selection control signal.

Compensation means may be provided for calculating a compensated mean level by adding a brightness compensation value according to a predetermined correction function to the mean level based on the mean brightness of the input image and wherein said mapping means is arranged for mapping each input sample of each of the sub-images output by the picture memory into a plurality of gray levels on the basis of the cumulative density functions and the compensated mean level.

The circuit may further comprise compensation means for calculating a compensated mean level by adding a brightness compensation value according to a predetermined correction function to the mean level based on the mean brightness of the input image, and wherein said mapping means is arranged for mapping each input sample of each of the sub-images into a plurality of gray levels on the basis of the cumulative density functions and the compensated mean level.

Preferably, said mapping means comprises: a first mapper for mapping the input sample into a gray level from a minimum level $X_0$ to a compensated mean level $B_m$ according to a first transform function which is defined by use of one of the cumulative density functions; and a second mapper for mapping the input sample into a gray level from $B_m'$ to a maximum level $X_{L-1}$ according to a second transform function which is defined by use of the other one of the cumulative density functions, wherein $B_m' = B_m + X_{L-1}/(L-1)$.

Said compensation means preferably adds a brightness compensation value which is greater than zero to the mean level when the mean level is less than a first threshold, and a brightness compensation value which is less than zero to the mean level when the mean level is greater than a second threshold.

Said outputting means may comprise: a comparator for comparing the mean level with the input sample from said picture memory to output a selection control signal; and a selector for selecting one of the output levels from said first and second mappers according to the selection control signal.

Said outputting means may comprise: a comparator for comparing the mean level with the input sample to output a selection control signal; and a selector for selecting one of the output levels from said first and second mappers according to the selection control signal.

The circuit may further comprise a buffer for storing the cumulative density functions calculated by said third calculating means updating the stored functions by a picture unit, and providing a predetermined number of cumulative density function values to said mapping means.

According to an embodiment of the invention, there is provided an image enhancing circuit in which an image signal expressed as a predetermined number (L) of gray levels is histogram-equalized, said circuit comprising: first calculating means for calculating a gray level distribution of an input image signal in a picture unit; second calculating means for calculating a mean level of the input image signal in a picture unit; compensation means for adding a brightness compensation value according to a predetermined correction function to the mean level based on the mean brightness of the input image to output a compensated mean level; third calculating means for dividing the gray level distribution into a predetermined number of sub-images according to the mean level and calculating cumulative density functions for each sub-image; mapping means for mapping the samples of each sub-image to gray levels according to the cumulative density functions and the compensated mean level; and outputting means for selectively outputting one of the mapped samples output from said mapping means as an enhanced signal, according to the result obtained through the comparison between the input image signal and the mean level.

Preferably, said mapping means comprises: a first mapper for mapping the input image signal which is equal to or less than the mean level to a gray level from a minimum level $X_0$ to a compensated mean level $B_m$ according to a corresponding cumulative density function value of the input image signal; and a second mapper for mapping the input image signal which is greater than the mean level to a gray level from $B_m'$ to a maximum level $X_{L-1}$ according to a corresponding cumulative density function value of the input image signal, wherein $B_m'=B_m+X_{L-1}/(L-1)$.

Said outputting means preferably comprises: a comparator for comparing the level of the input image signal with the mean level to output a selecting control signal; and a selector for selecting an output of one of said first and second mappers according to the selecting control signal.

Preferably, the circuit further comprises a buffer for updating said cumulative density functions and providing previously stored cumulative density functions to said mapping means.

Preferably, said compensation means adds a brightness compensation value which is greater than zero to the mean level when it is very low, that is, the input image is very dark, and a brightness compensation value which is less than zero to the mean level when it is very high, that is, the input image is very bright, to output a compensated mean level by which the brightness of the enhanced signal is controlled.

Said picture unit is preferably a frame unit and the predetermined number of sub-images is two.

The unit of a picture may be frame or a field.

For a better understanding of the invention, and to show how embodiments of the same may be carried into effect, reference will now be made, by way of example, to the accompanying diagrammatic drawings, in which:

Figure 1 is a block diagram of an image enhancing circuit according to a first embodiment of the present invention;

Figure 2 is a block diagram of an image enhancing circuit according to a second embodiment of the present invention;

Figure 3 is a block diagram of an image enhancing circuit according to a third embodiment of the present invention;

Figures 4A and 4B are graphs showing examples of a brightness correction function applied to the present invention;

Figures 5A and 5B are graphs showing examples of the relation between the mean level of an input image and the mean level compensated by the brightness correction functions shown in Figures 4A and 4B, respectively; and

Figure 6 is a block diagram of an image enhancing circuit according to a fourth embodiment of the present invention.

An image enhancing method using mean-separate histogram equalization (MSHE) according to embodiments of the present invention will be described.

Here, {X} denotes a given image, and $X_m$ denotes the mean brightness level (hereinafter, will be abbreviated as "mean level") of {X}. The given image {X} is composed of L discrete gray levels denoted by {$X_0$, $X_1$,..., $X_{L-1}$}, where $X_0=0$ represents a black level and $X_{L-1}=1$ represents a white level. Also, it is assumed that $X_m \in${$X_0$, $X_1$,..., $X_{L-1}$}.

Based on the mean level $X_m$, the input image is divided into two sub-image groups denoted by {X}$_L$ and {X}$_U$, wherein all samples in {X}$_L$ are equal to or less than the mean level $X_m$ and those in {X}$_U$ are greater than the mean level $X_m$.

Probability density functions (PDFs) for each of the sub-images {X}$_L$ and {X}$_U$ are defined, respectively, as following equations (1) and (2).

$$p_L(X_k) = \frac{n_k^L}{n_L}, \text{ for } k = 0,\ 1,...,m \qquad\qquad (1)$$

$$p_U(X_k) = \frac{n_k^U}{n_U}, \text{ for } k = m + 1,\ m + 2,...,\ L\text{-}1 \qquad\qquad (2)$$

where, $L$ represents the number of gray levels, $p_L(X_k)$ represents a probability of k-th gray level $X_k$ in the sub-image {X}$_L$, $p_U(X_k)$ represents a probability of k-th gray level $X_k$ in the sub-image {X}$_U$, $n_k^L$ and $n_k^U$ represent the number of occurrences of samples having the gray level $X_k$ in the sub-images {X}$_L$ and {X}$_U$, respectively, and $n_L$ and $n_U$ represent the total number of samples in each of the sub-images {X}$_L$ and {X}$_U$.

Also, Cumulative density functions (CDF) for each of the sub-images {X}$_L$ and {X}$_U$ are defined, respectively, as following equations (3) and (4).

$$c_L(X_k) = \sum_{j=0}^{k} p_L(X_j), \text{ for } k = 0,1,2,\dots,m \qquad\qquad \dots(3)$$

$$c_U(X_k) = \sum_{j=m+1}^{k} p_U(X_j), \text{ for } k=m+1,m+2,\dots,L-1 \qquad\qquad \dots(4)$$

Based on the above CDFs, an output $Y_H$ of the proposed MSHE of the present invention, for the given input sample $X_k$, is given by the following equation (5).

$$Y_H = \begin{cases} c_L(X_k)X_m & \text{if } X_k \leq X_m \\ X_{m+1} + (X_{L-1} - X_{m+1})c_U(X_k) & \text{if } X_k > X_m \end{cases} \qquad \dots(5)$$

That is, the samples of {X}$_L$ are mapped into (0,$X_m$) according to the CDF of equation (3), and the samples of $\{X\}_U$ are mapped into $(X_{m+1}, X_{L-1})$, respectively. Thus, each sub-image is equalized independently by the mean-separate histogram equalization (MSHE) according to the present invention.

Also, it can easily be seen that the average output of the mean-separate histogram equalization (MSHE) is given by $(0.5+X_m)/2$ when the number of gray levels L are large enough and the PDF of the input image X is symmetrical about the mean level of the input image. That is, the average output of the proposed mean-separate algorithm is the arithmetical average of the middle gray level (0.5) and ideal mean level (0.5), while the average output of the conventional histogram is 0.5.

In another image enhancement method of the present invention, which carries out a brightness compensation along with the contrast enhancement, an output $Y_H$ of the proposed MSHE is given by the following formula (6) for a given input sample $X_k$.

$$Y_H = \begin{cases} c_L(X_k) B_m & \text{if } X_k \leq X_m \\ B'_{m+1} + (X_{L-1} - B'_m) c_U(X_K) & \text{if } X_k > X_m \end{cases} \quad \text{......}(6)$$

where,

$$B_m = X_m + \Delta \tag{7}$$

Here, $B_m$ is a compensated mean level and $\Delta$ is a brightness compensation value which is preset by use of a predetermined compensation function according to the brightness level. Thus, the compensated mean level $B_m$ results from adding the brightness compensation value $\Delta$ to the mean level $X_m$. At this time, we also assume that $B_m \in \{X_0, X_1, ..., X_{L-1}\}$.

Meanwhile, $B_m'$ in the equation (6) is given by the following equation (8),

$$B_m' = B_m + X_{L-1}/(L-1) \tag{8}$$

and represents the first gray level in the higher sub-image group, in other words, the gray level next to the compensated mean level $B_m$.

As a consequence, according to the equation (6), the input samples which are equal to or less than the mean level $X_m$ are mapped into a gray level of from 0 to $B_m$ $(0, B_m)$, and the samples greater than the mean level $X_m$ are mapped into a gray level of from $B_m'$ to $X_{L-1}$ $(B_m', X_{L-1})$.

Thus, the equalized output $Y_H$ becomes brighter when the brightness compensation value is greater than 0 ($\Delta>0$), and the equalized output $Y_H$ becomes darker when the brightness compensation value is less than 0 ($\Delta<0$). As $\Delta$ is increased, the dynamic range of a lower portion of the image is enhanced, and as $\Delta$ is decreased, the dynamic range of an upper portion is enhanced. The compensated mean level $B_m$ is appropriately compensated according to the mean level $X_m$ of the given image signal, that is, the brightness and darkness of the image, enhances greatly the quality of the input image along with the mean separate histogram equalization.

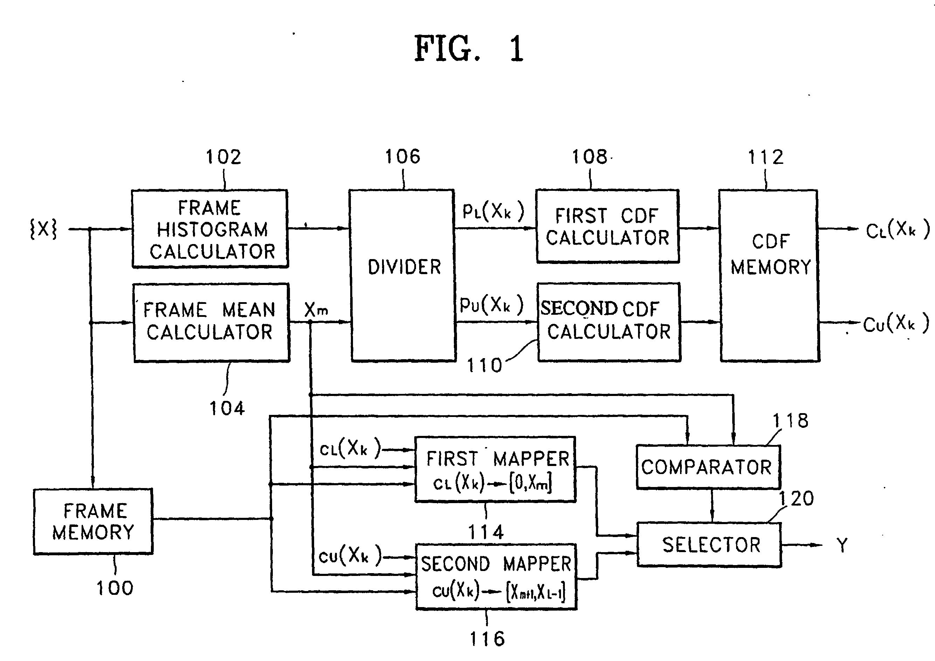

Next, preferred embodiments of an image enhancing circuit according to the present invention using MSHE will be described with reference to Figures 1 to 6.

Figure 1 is a block diagram of an image enhancing circuit according to a preferred embodiment of the present invention.

In Figure 1, a frame histogram calculator 102 calculates the probability density function $p(X_k)$ which represents a gray level distribution in the input image $\{X\}$ according to the equation (1) by a unit of a picture. At this stage, a frame is used for the picture unit. However, a field may be used for the picture unit alternatively.

A frame mean calculator 104 calculates the mean level $X_m$ of the input image $\{X_k\}$ in a frame unit.

A divider 106 divides the gray level distribution calculated by histogram calculator 102 into a predetermined number (here, two) of sub-image distributions based on the mean level $X_m$, and outputs the probability density functions $p_L(X_k)$ and $p_U(X_k)$ of two sub-images $\{X\}_L$ and $\{X\}_U$.

A first CDF calculator 108 receives the probability density function $p_L(X_k)$ of the sub-image $\{X\}_L$ (hereinafter, referred to as a "first sub-image") in which all image samples are equal to or less than the mean level $X_m$ output by the divider 106, and calculates the CDF $c_L(X_k)$ by use of the equation (3).

A second CDF calculator 110 receives the probability density function $p_U(X_k)$ of the sub-image $\{X\}_U$ (hereinafter, referred to as a "second sub-image") in which all image samples are greater than the mean level $X_m$ output by the divider 106, and calculates the CDF $c_U(X_k)$ by use of the equation (4).

A CDF memory 112 stores the cumulative density function $c_L(X_k)$ and $c_U(X_k)$ calculated by the CDF calculators 108 and 110 by a unit of one frame, updates the stored values according to a synchronization signal, and outputs the cumulative density function value $c(X_k)$ corresponding to a sample $X_k$ output by the frame memory 100 and the cumulative density function value $c(X_m)$ corresponding to the mean level $X_m$ output by the frame mean calculator 104. At this stage, the CDF memory 112 is used as a buffer. Here, the synchronous signal is a field synchronization signal when the picture unit is a field and a frame synchronization signal when the picture unit is a frame.

The frame memory 100 stores the input image $\{X\}$ by a frame unit. Since the cumulative density functions $c_L(X_k)$ and $c_U(X_k)$ output by the first and the second CDF calculators 108 and 110 are the cumulative density functions of an image delayed by one frame compared with the currently input image $\{X\}$, the input image $\{X\}$ is delayed by one frame by the frame memory 100 so that the image signal of the frame corresponding to the cumulative density functions $c_L(X_k)$ and $c_U(X_k)$ is input to the first and the second mappers 114 and 116.

The first mapper 114 receives the cumulative density function value $c_L(X_k)$ from the first CDF calculator 108, the mean level $X_m$ from the frame mean calculator 104 and the one-frame delayed input sample $X_k$ from the frame memory 100, and maps the one-frame delayed input sample $X_k$ of the first sub-image $\{X\}_L$ to a gray level of from 0 to $X_m$ according to the first expression in the equation (5).

The second mapper 116 receives the cumulative density function value $c_U(X_k)$ from the second CDF calculator 110, the mean level $X_m$ from the frame mean calculator 104 and the one-frame delayed input sample $X_k$ from the frame memory 100, and maps the one-frame delayed input sample $X_k$ of the second sub-image $\{X\}_U$ to a gray level of from $X_{m+1}$ to $X_{L-1}$ according to the second expression in the equation (5).

A comparator 118 compares the input sample $X_k$ output from frame memory 100 with the mean level $X_m$ output from frame mean calculator 104, and outputs a select control signal according to the compared result.

A selector 120 selects the signal output by the first mapper 114 or that by the second mapper 116 in accordance with the selection control signal. Specifically, the selector 120 selects the signal output by the first mapper 114 in case that the selection control signal indicates that the input sample $X_k$ belongs to the first sub-image $\{X\}_L$. Meanwhile, the selector 120 selects the signal output by the second mapper 116 in the case that the selection control signal indicates that the input sample $X_k$ belongs to the second sub-image $\{X\}_U$.

Meanwhile, in the present invention, the histogram calculator 102 and the CDF calculator 104 can be incorporated into a single block for calculating the gray level distribution and calculating the CDF also according to the gray level distribution in a unit of a picture with respect to the input image $\{X\}$.

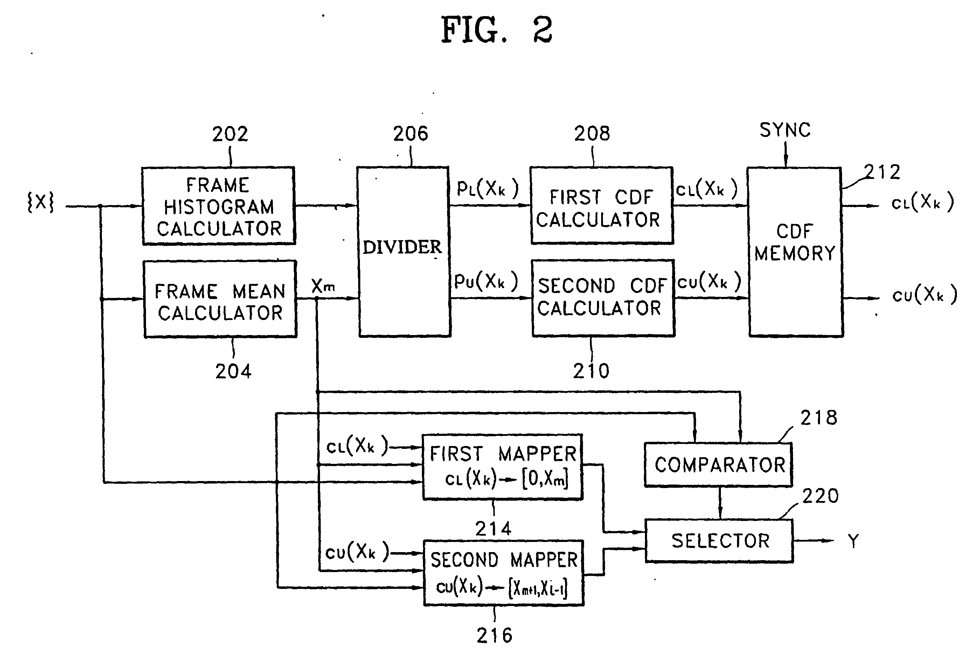

Figure 2 is a block diagram of an image enhancing circuit according to another preferred embodiment of the present invention.

In Figure 2, a frame histogram calculator 202 calculates the probability density function $p(X_k)$ which represents a gray level distribution in the input image $\{X\}$ according to the equation (1) by a unit of a picture.

A frame mean calculator 204 calculates the mean level $X_m$ of the input image $\{X_k\}$ in a frame unit.

A divider 206 divides the gray level distribution calculated by histogram calculator 202 into two sub-image distributions based on the mean level $X_m$, and outputs the probability density functions $p_L(X_k)$ and $p_U(X_k)$ of two sub-images $\{X\}_L$ and $\{X\}_U$.

A first CDF calculator 208 receives the probability density function $p_L(X_k)$ of the first sub-image $\{X\}_L$, and calculates the CDF $c_L(X_k)$ by use of the equation (3).

A second CDF calculator 210 receives the probability density function $p_U(X_k)$ of the second sub-image $\{X\}_U$, and calculates the CDF $c_U(X_k)$ by use of the equation (4).

A CDF memory 212 stores the cumulative density function $c_L(X_k)$ and $c_U(X_k)$ calculated by the CDF calculators 208 and 210 by a unit of one frame, updates the stored values according to a synchronization signal, and outputs the cumulative density function value $c(X_k)$ corresponding to a sample $X_k$ and the cumulative density function value $c(X_m)$ corresponding to the mean level $X_m$ output by the frame mean calculator 204.

The first mapper 214 receives the cumulative density function value $c_L(X_k)$ from the first CDF calculator 208, the mean level $X_m$ from the frame mean calculator 204 and the input sample $X_k$, and maps the input sample $X_k$ of the first sub-image $\{X\}_L$ to a gray level of from 0 to $X_m$ according to the first expression in the equation (5).

The second mapper 216 receives the cumulative density function value $c_U(X_k)$ from the second CDF calculator 210, the mean level $X_m$ from the frame mean calculator 204 and the input sample $X_k$, and maps the input sample $X_k$ of the second sub-image $\{X\}_U$ to a gray level of from $X_{m+1}$ to $X_{L-1}$ according to the second expression in the equation (5).

A comparator 218 compares the input sample $X_k$ with the mean level $X_m$ output from frame mean calculator 204, and outputs a select control signal according to the compared result.

A selector 220 selects the signal output by the first mapper 214 or that by the second mapper 216 in accordance with the selection control signal. Specifically, the selector 220 selects the signal output by the first mapper 214 in case that the selection control signal indicates that the input sample $X_k$ belongs to the first sub-image $\{X\}_L$. Meanwhile, the selector 220 selects the signal output by the second mapper 216 in the case that the selection control signal indicates that the input sample $X_k$ belongs to the second sub-image $\{X\}_U$.

In this embodiment of Figure 2, a frame memory has been omitted, compared with the first embodiment of the present invention of Figure 1, considering the feature that there exists a high correlation between the neighbouring frames. Thus, the sample $X_k$ input to the first and the second mappers 210 and 212 belong to a frame next to the one to which the output signals of the CDF memory 208 is related. Consequently, the hardware is reduced.

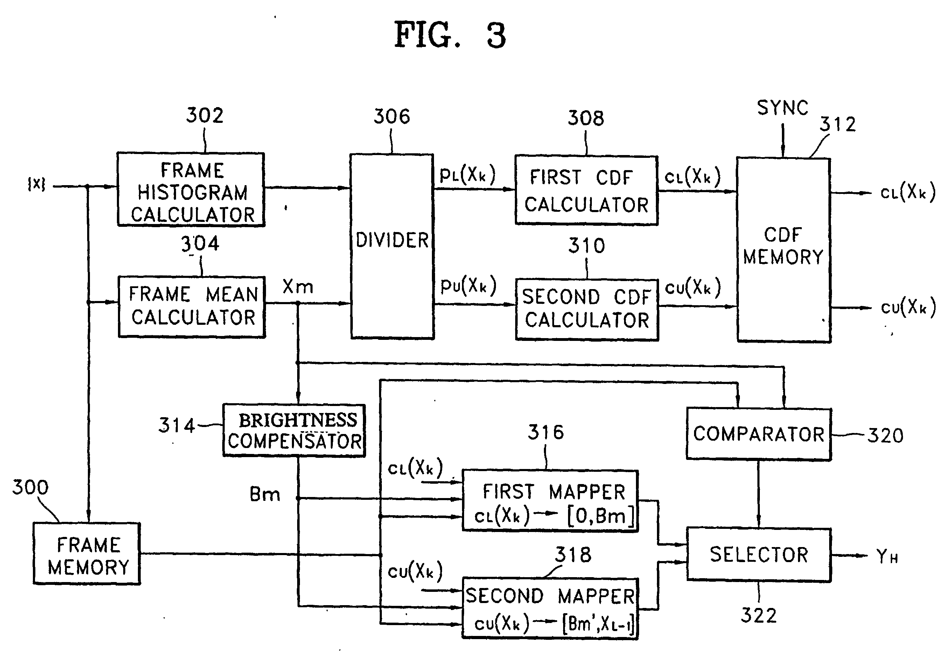

Figure 3 is a block diagram of an image enhancing circuit according to yet another preferred embodiment of the present invention. The components of the circuit shown in Figure 3 are similar to those of the circuit shown in Figure 1 except for a brightness compensator 314, and a first and a second mappers 316 and 318. Thus, the description will be focused on the brightness compensator 314, and the first and the second mappers 316 and 318.

In Figure 3, the brightness compensator 314 receives the mean level $X_m$ output by a frame mean calculator 304, adds a brightness compensation value ($\Delta$) corresponding to the mean brightness of an input image, as described in the equation (7), and outputs the compensated mean level $B_m$.

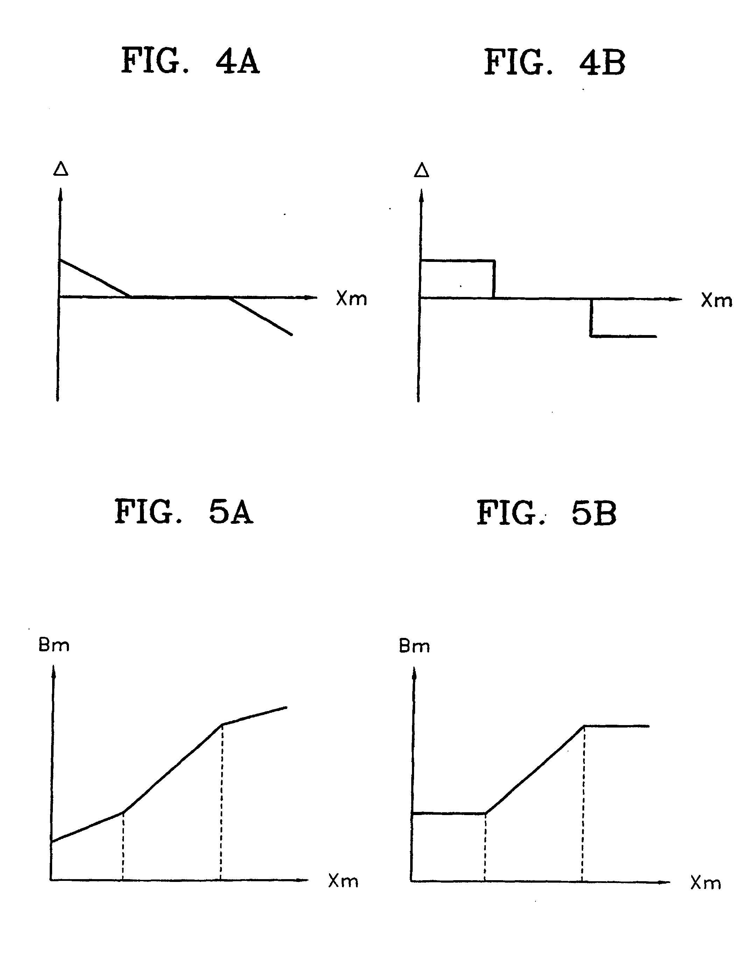

The brightness compensation value $\Delta$ is determined by use of a predetermined compensation function such as ones shown in Figures 4A and 4B. However, the compensation functions shown in Figures 4A and 4B are not more than exemplary ones, and other functions of different shape can be contemplated as well.

The brightness of the equalized output is controlled the brightness compensation value according to the compensation function as shown in Figures 4A and 4B. Specifically, when the mean level $X_m$ of the input image is very low, i.e., for a quite dark image, the equalized output becomes brighter by the mean-matching histogram equalization method of the present invention since a brightness compensation value $\Delta$ greater than "0" is added to the mean level $X_m$.

Meanwhile, when the mean level $X_m$ of the input image is very high, i.e., for a quite brightness image, the equalized output becomes darker by the mean-matching histogram equalization method of the present invention since a brightness compensation value $\Delta$ less than "0" is added to the mean level $X_m$. Accordingly, the compensated mean level $B_m$ compensated by a suitable brightness compensation value $\Delta$ according to the mean level $X_m$ drastically improves the quality of the input image.

Figures 5A and 5B show the relation between the compensated mean level $B_m$ compensated by a compensated brightness compensation value $\Delta$ in accordance with the brightness compensation function shown in Figures 4A and 4B and the mean level $X_m$ of the input image.

Meanwhile, the first mapper 316 receives the cumulative density function value $c_L(X_k)$ from the first CDF calculator 308, the compensated mean level $B_m$ from the brightness compensator 314 and the one-frame delayed input sample $X_k$ from the frame memory 300, and maps the one-frame delayed input sample $X_k$ of the first sub-image $\{X\}_L$ to a gray level of from 0 to $B_m$ according to the first expression in the equation (6).

The second mapper 318 receives the cumulative density function value $c_U(X_k)$ from the second CDF calculator 310, the compensated mean level $B_m$ from the bright compensator 314 and the one-frame delayed input sample $X_k$ from the frame memory 300, and maps the one-frame delayed input sample $X_k$ of the second sub-image $\{X\}_U$ to a gray level of from $B_m{}'$ to $X_{L-1}$ according to the second expression in the equation (6). Here, $B_m{}'$ is given by the equation (8).

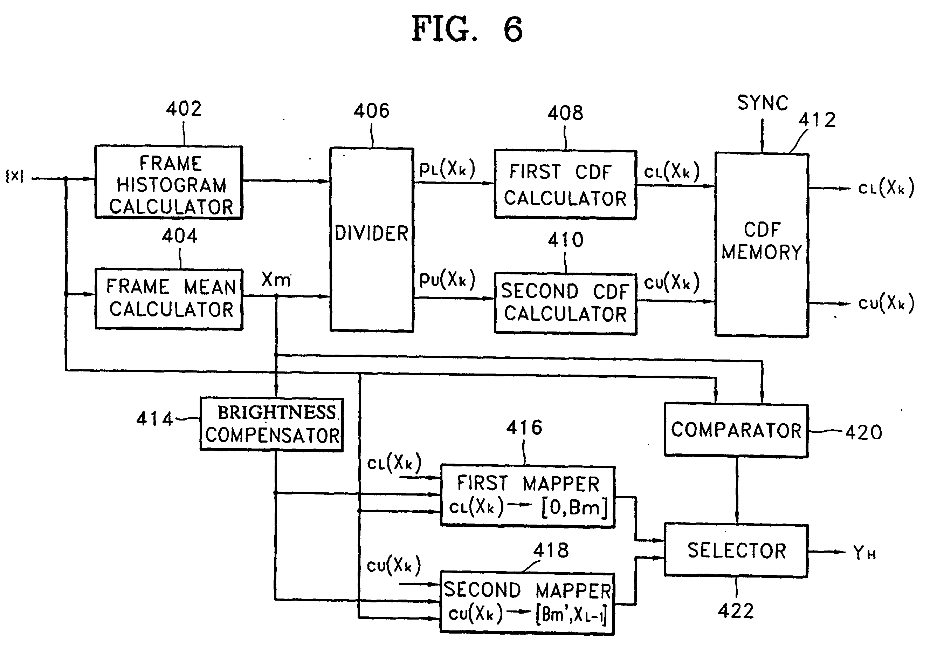

Figure 6 is a block diagram of an image enhancing circuit according to still yet another preferred embodiment of the present invention. The components of the circuit shown in Figure 6 are similar to those of the circuit shown in Figure 2 except for a brightness compensator 414, and a first and a second mappers 416 and 418. Thus, the description will be focused on the brightness compensator 414, and the first and the second mappers 416 and 418.

In Figure 6, the brightness compensator 414 receives the mean level $X_m$ output by a frame mean calculator 404, adds a brightness compensation value ($\Delta$) corresponding to the mean brightness of an input image, as described in the equation (7), and outputs the compensated mean level $B_m$.

The first mapper 416 receives the cumulative density function value $c_L(X_k)$ from the first CDF calculator 408, the compensated mean level $B_m$ from the bright compensator 414 and the input sample $X_k$, and maps the input sample $X_k$ of the first sub-image $\{X\}_L$ to a gray level of from 0 to $B_m$ according to the first expression in the equation (6).

The second mapper 418 receives the cumulative density function value $c_U(X_k)$ from the second CDF calculator 410, the compensated mean level $B_m$ from the bright compensator 414 and the input sample $X_k$, and maps the input sample $X_k$ of the second sub-image $\{X\}_U$ to a gray level of from $B_m{}'$ to $X_{L-1}$ according to the second expression in the equation (6). Here, $B_m{}'$ is given by the equation (8).

As was the case for the image enhancing circuit of Figure 2, the hardware is reduced by omitting the frame memory considering the characteristics that there exists a high correlation between the neighbouring frames.

The image enhancing method using the MSHE and the circuit adopting the method effectively reduces the abrupt changes in brightness as well as any artefact generated by the conventional histogram equalization, so that image contrast is enhanced and the brightness of the entire image can be preserved.

Also, according to the image enhancing method of the present invention and the circuit adopting the method, the MSHE is performed considering the brightness compensation value according to the mean brightness of the input image, so that the contrast of an input image signal which is excessively dark or bright is enhanced, and thereby image quality is improved.

Thus, the present invention can be applied to various fields related to image enhancing, such as broadcasting, radar signal processing, medical engineering and home appliances.

## Claims

1.  A method for enhancing an image by histogram-equalizing an image signal represented by a predetermined number of gray levels, said method comprising the steps of:

    (a) calculating a mean level value of an input image signal in a picture unit;

    (b) dividing the input image signal into a predetermined number of sub-images on the basis of a comparison result of the mean level and a gray level of each sample of the input image signal;

    (c) calculating cumulative density functions for each sub-image; and

    (d) histogram-equalizing each sub-image independently by mapping each sample of the sub-image into a new gray level on the basis of the cumulative density functions.

2.  A method for enhancing an image as claimed in claim 1, wherein the input image signal is divided into two sub-images in said step (b).

3.  A method for enhancing an image as claimed in claim 1 or 2, wherein said step (d) comprises the steps of:

    (d1) mapping the input sample into a gray level of a first range by using a first transform function which is defined by use of one of the cumulative density functions;

    (d2) mapping the input sample into a gray level of a second range by using a second transform function which is defined by use of another one of the cumulative density functions;

    (d3) comparing the input sample with the mean level; and

    (d4) selecting one of two mapped gray levels in said step (d1) and (d2), respectively, according to the result of said step (d3).

4.  A method according to claim 1, 2 or 3, wherein there is further provided a step (a1) comprising obtaining a gray level distribution of the input image signal in a picture unit; and wherein said step (c) is performed on the basis of the gray level distribution.

5.  A method according to claim 4, wherein the first range in said step (d1) comprises gray levels from a minimum level $X_0$ to a mean level $X_m$ and the second range in said step (d2) comprises gray levels from a gray level next to the mean level $X_{m+1}$ to the maximum level $X_{L-1}$.

6.  A method according to claim 4, wherein:

    a compensated mean level is obtained by adding a brightness compensation value according to a predetermined correction function based on the mean brightness of the input image to said mean level; and

    in said step (d) of histogram-equalizing, each sub-image, is histogram equalized independently by mapping each sample of the sub-image into a new gray level on the basis of the cumulative density functions and the compensated mean level.

7.  A method for enhancing an image as claimed in claim 6, wherein the gray level distribution is divided into two sub-images according to the mean level in said step (b).

8.  A method for enhancing image as claimed in claim 7, wherein said step (d) comprises the steps of:

(d1) mapping the input sample which is equal to or less than the mean level to a gray level from the minimum level $X_0$ to a compensated mean level $B_m$ according to a corresponding cumulative density function value of the input sample; and

(d2) mapping the input image signal which is greater than the mean level to a gray level from $B_m'$ to a maximum gray level $X_{L-1}$ according to a corresponding cumulative density function value of the input sample, wherein $B_m'=B_m+X_{L-1}/(L-1)$.

9. A method for enhancing an image as claimed in claim 6, wherein in obtaining said compensated mean level, the brightness compensation value is greater than zero when the mean level is less than a first threshold, and the brightness compensation value is less than zero when the mean level is greater than a second threshold.

10. A circuit for enhancing image by histogram-equalizing an image signal represented by a predetermined number of gray levels, the circuit comprising:

first calculating means (102; 202; 302; 402) for calculating a gray level distribution of an input image signal in a picture unit;

second calculating means (104; 204; 304; 404) for calculating a mean level of the input image signal in a picture unit;

third calculating means (106-112; 206-212; 306-312; 406-412) for dividing the gray level distribution into a predetermined number of sub-images based on a comparison result of the mean level and a gray level of each example of the input image signal;

mapping means (114, 116; 214, 216; 316, 318; 416, 418) for mapping each input sample of each of the sub-images into a plurality of gray levels on the basis of the cumulative density functions; and

outputting means (118, 120; 218, 220; 320, 322; 420, 422) for comparing the input sample with the mean level and selecting one of the mapped gray levels output by said mapping means to output the selected level.

11. A circuit for enhancing image as claimed in claim 10, wherein a unit of picture is a frame and a predetermined number is two.

12. A circuit according to claim 10 or 11, wherein there is further provided a picture memory (100, 300) for delaying the input image signal by a picture unit and wherein said mapping means (114, 116; 316, 318) maps each input sample of the sub-image output by said picture memory into a plurality of gray levels on the basis of the cumulative density functions.

13. A circuit according to claims 10 or 11, wherein said mapping means (214, 216) is arranged for mapping each input sample of each sub-image into a plurality of gray levels on the basis of the cumulative density functions calculated for the picture just before the current picture.

14. A circuit for enhancing images as claimed in claim 12 or 13, wherein said mapping means (144, 116; 214, 216) comprises:

a first mapper (114; 214) for mapping the input sample into a gray level from a minimum level $X_0$ to a mean level $X_m$ by using a first transform function which is defined by use of one of the cumulative density functions; and

a second mapper (116; 216) for mapping the input sample into a gray level from a level $X_{m+1}$ next to the mean level to a maximum level $X_{L-1}$ by using a second transform function which is defined by use of the other one of the cumulative density functions.

15. A circuit according to claim 14 as dependant upon claim 15, wherein said outputting means (218, 220) comprises:

a comparator (218) for comparing the-input sample with the mean level to output a selection control signal; and

a selector (220) for selecting one of the output levels from said first and second mappers. (214, 216) according to the selection control signal.

**16.** A circuit according to claim 12 further comprising compensation means (314) for calculating a compensated mean level by adding a brightness compensation value according to a predetermined correction function to the mean level based on the mean brightness of the input image and wherein said mapping means (316, 318) is arranged for mapping each input sample of each of the sub-images output by the picture memory (300) into a plurality of gray levels on the basis of the cumulative density functions and the compensated mean level.

**17.** A circuit according to claim 10 or 11, further comprising compensation means (414) for calculating a compensated mean level by adding a brightness compensation value according to a predetermined correction function to the mean level based on the mean brightness of the input image, and wherein said mapping means (416, 418) is arranged for mapping each input sample of each of the sub-images into a plurality of gray levels on the basis of the cumulative density functions and the compensated mean level.

**18.** A circuit according to claim 16 or 17, wherein said mapping means (316, 318; 416, 418) comprises:

a first mapper (316; 416) for mapping the input sample into a gray level from a minimum level $X_0$ to a compensated mean level $B_m$ according to a first transform function which is defined by use of one of the cumulative density functions; and

a second mapper (318; 418) for mapping the input sample into a gray level from $B_m'$ to a maximum level $X_{L-1}$ according to a second transform function which is defined by use of the other one of the cumulative density functions, wherein $B_m' = B_m + X_{L-1}/(L-1)$.

**19.** A circuit according to claim 16 or 17, wherein said compensation means (314; 414) adds a brightness compensation value which is greater than zero to the mean level when the mean level is less than a first threshold, and a brightness compensation value which is less than zero to the mean level when the mean level is greater than a second threshold.

**20.** A circuit according to claim 14 as dependant upon claim 12 or claim 18 as dependant upon claim 16, wherein said outputting means comprises:

a comparator (118; 320) for comparing the mean level with the input sample from said picture memory (100; 300) to output a selection control signal; and

a selector (120; 322) for selecting one of the output levels from said first (144; 316) and second (116; 318) mappers according to the selection control signal.

**21.** A circuit according to claim 18 as dependant upon claim 17, wherein said outputting means (420, 422) comprises:

a comparator (420) for comparing the mean level with the input sample to output a selection control signal; and

a selector (422) for selecting one of the output levels from said first and second mappers (416, 418) according to the selection control signal.

**22.** A circuit for enhancing images as claimed in any of claims 10 to 21, further comprising a buffer (112; 212; 312; 412) for storing the cumulative density functions calculated by said third calculating means (106-110; 206-210; 306-310; 406-410), updating the stored functions by a picture unit, and providing a predetermined number of cumulative density function values to said mapping means.

**23.** A method or a circuit according to any of claims 1-22 wherein the unit of a picture is a frame or a field.

**Patentansprüche**

**1.** Verfahren zum Verbessern eines Bildes durch Histrogramm-Ausgleich eines Bildsignals, das durch eine vorgegebene Anzahl von Graustufen dargestellt wird, wobei das Verfahren die folgenden Schritte umfasst:

(a) Berechnen eines Durchschnittspegelwertes eines Eingangs-Bildsignals in einer Bildeinheit;

(b) Unterteilen des Eingangs-Bildsignals in eine vorgegebene Anzahl von Unterbildern auf der Basis eines Ergebnisses des Vergleichs des Durchschnittspegels und einer Graustufe jedes Abtastwertes des Eingangs-Bildsignals;

(c) Berechnen kumulativer Dichtefunktionen für jedes Unterbild; und

(d) unabhängiger Histogramm-Ausgleich jedes Unterbildes durch Abbilden jedes Abtastwertes des Unterbildes auf einer neuen Graustufe auf der Basis der kumulativen Dichtefunktionen.

2. Verfahren zum Verbessern eines Bildes nach Anspruch 1, wobei das Eingangs-Bildsignal in dem Schritt (b) in zwei Unterbilder unterteilt wird.

3. Verfahren zum Verbessern eines Bildes nach Anspruch 1 oder 2, wobei der Schritt (d) die folgenden Schritte umfasst:

(d1) Abbilden des Eingangs-Abtastwertes auf einer Graustufe eines ersten Bereiches unter Verwendung einer ersten Transformationsfunktion, die mittels einer der kumulativen Dichtefunktionen definiert wird;

(d2) Abbilden des Eingangs-Abtastwertes auf einer Graustufe eines zweiten Bereiches unter Verwendung einer zweiten Transformationsfunktion, die mittels einer anderen der kumulativen Dichtefunktionen definiert wird;

(d3) Vergleichen des Eingangs-Abtastwertes mit dem Durchschnittspegel; und

(d4) Auswählen einer der zwei abgebildeten Graustufen in dem Schritt (d1) bzw. (d2) entsprechend dem Ergebnis des Schritts (d3).

4. Verfahren nach Anspruch 1, 2 oder 3, wobei des Weiteren ein Schritt (a1) vorhanden ist, der das Bestimmen einer Graustufenverteilung des Eingangs-Bildsignals in einer Bildeinheit umfasst; und wobei der Schritt (c) auf der Basis der Graustufenverteilung ausgeführt wird.

5. Verfahren nach Anspruch 4, wobei der erste Bereich in dem Schritt (d1) Graustufen von einem Minimalpegel $X_o$ zu einem Durchschnittspegel $X_m$ umfasst, und der zweite Bereich in dem Schritt (d2) Graustufen von einer Graustufe neben dem Durchschnittspegel $X_{m+1}$ zu dem Maximalpegel $X_{L-1}$ umfasst.

6. Verfahren nach Anspruch 4, wobei:

ein kompensierter Durchschnittspegel bestimmt wird, indem ein Helligkeitskompensationswert entsprechend einer vorgegebenen Korrekturfunktion auf der Basis der Durchschnittshelligkeit des Eingangs-Bildes zu dem Durchschnittspegel addiert wird; und

in dem Schritt (d) des Histogramm-Ausgleichs Histogramm-Ausgleich jedes Unterbildes unabhängig ausgeführt wird, indem jeder Abtastwert des Unterbildes auf einer neuen Graustufe auf der Basis der kumulativen Dichtefunktionen und des kompensierten Durchschnittspegels abgebildet wird.

7. Verfahren zum Verbessern eines Bildes nach Anspruch 6, wobei die Graustufenverteilung entsprechend dem Durchschnittspegel in dem Schritt (b) in zwei Unterbilder unterteilt wird.

8. Verfahren zum Verbessern eines Bildes nach Anspruch 7, wobei der Schritt (d) die folgenden Schritte umfasst:

(d1) Abbilden des Eingangs-Abtastwertes, der dem Durchschnittspegel entspricht oder geringer ist als dieser, auf einer Graustufe von dem Minimalpegel $X_o$ zu einem kompensierten Durchschnittspegel $B_m$ entsprechend einem entsprechenden kumulativen Dichtefunktionswert des Eingangs-Abtastwertes; und

(d2) Abbilden des Eingangs-Bildsignals, das größer ist als der Durchschnittspegel, auf einer Graustufe von $B_m{}'$ zu einer Maximal-Graustufe $X_{L-1}$ entsprechend einem entsprechenden kumulativen Dichtefunktionswert des Eingangs-Abtastwertes, wobei $B_m' = B_m + X_{L-1} / (L-1)$.

9. Verfahren zum Verbessern eines Bildes nach Anspruch 6, wobei beim Bestimmen des kompensierten Durchschnittspegels der Helligkeitskompensationswert größer ist als Null, wenn der Durchschnittspegel unter einem ersten Schwellenwert liegt, und der Helligkeitskompensationswert kleiner ist als Null, wenn der Durchschnittspegel über einem zweiten Schwellenwert liegt.

10. Schaltung zum Verbessern eines Bildes durch Histogramm-Ausgleich eines Bildsignals, das durch eine vorgegebene Anzahl von Graustufen dargestellt wird, wobei die Schaltung umfasst:

   eine erste Berechnungseinrichtung (102; 202; 302; 402), die eine Graustufenverteilung eines Eingangs-Bildsignals in einer Bildeinheit berechnet;

   eine zweite Berechnungseinrichtung (104; 204; 304; 404), die einen Durchschnittspegel des Eingangs-Bildsignals in einer Bildeinheit berechnet;

   eine dritte Berechnungseinrichtung (106-112; 206-212; 306-312; 406-412), die die Graustufenverteilung in eine vorgegebene Anzahl von Unterbildern auf der Basis des Ergebnisses eines Vergleichs des Durchschnittspegels und einer Graustufe jedes Beispiels des Eingangs-Bildsignals unterteilt;

   eine Abbildungseinrichtung (114, 116; 214, 216; 316, 318; 416, 418), die jeden Eingangs-Abtastwert jedes der Unterbilder auf einer Vielzahl von Graustufen auf der Basis der kumulativen Dichtefunktionen abbildet; und

   eine Ausgabeeinrichtung (118, 120; 218, 220; 320, 322; 420, 422), die den Eingangs-Abtastwert mit dem Durchschnittspegel vergleicht und eine der abgebildeten Graustufen auswählt, die von der Abbildungseinrichtung ausgegeben wird, um den ausgewählten Pegel auszugeben.

11. Schaltung zum Verbessern eines Bildes, wobei eine Bildeinheit ein Einzelbild ist und eine vorgegebene Anzahl zwei beträgt.

12. Schaltung nach Anspruch 10 oder 11, wobei des Weiteren ein Bildspeicher (100, 300) vorhanden ist, der das Eingangs-Bildsignal um eine Bildeinheit verzögert, und wobei die Abbildungseinrichtung (114, 116; 316, 318) jeden Eingangs-Abtastwert des Unterbildes, das von dem Bildspeicher ausgegeben wird, auf einer Vielzahl von Graustufen auf der Basis der kumulativen Dichtefunktionen abbildet.

13. Schaltung nach den Ansprüche 10 oder 11, wobei die Abbildungseinrichtung (214, 216) so ausgeführt ist, dass sie jeden Eingangs-Abtastwert jedes Unterbildes auf einer Vielzahl von Graustufen auf der Basis der kumulativen Dichtefunktionen abbildet, die für das Bild unmittelbar vor dem momentanen Bild berechnet wurden.

14. Schaltung zum Verbessern von Bildern nach Anspruch 12 oder 13, wobei die Abbildungseinrichtung (144, 116; 214, 216) umfasst:

   eine erste Abbildungseinheit (114; 214), die den Eingangs-Abtastwert auf einer Graustufe von einem Minimalpegel $X_o$ zu einem Durchschnittspegel $X_m$ unter Verwendung einer ersten Transformationsfunktion abbildet, die mittels einer der kumulativen Dichtefunktionen definiert wird; und

   eine zweite Abbildungseinheit (116; 216), die den Eingangs-Abtastwert auf einer Graustufe von einem Pegel $X_{m+1}$ neben dem Durchschnittspegel zu einem Maximalpegel $X_{L-1}$ unter Verwendung einer zweiten Transformationsfunktion abbildet, die mittels der anderen der kumulativen Dichtefunktionen definiert wird.

15. Schaltung nach Anspruch 14, wenn abhängig von Anspruch 15, wobei die Ausgabeeinrichtung (218, 220) umfasst:

   einen Komparator (218), der den Eingangs-Abtastwert mit dem Durchschnittspegel vergleicht, um ein Auswahl-Steuersignal auszugeben; und

   einen Selektor (220), der einen der Ausgangspegel von der ersten und der zweiten Abbildungseinheit (214, 216) entsprechend dem Auswahl-Steuersignal auswählt.

16. Schaltung nach Anspruch 2, die des Weiteren eine Kompensationseinrichtung (314) umfasst, die einen kompensierten Durchschnittspegel berechnet, indem sie einen Helligkeitskompensationswert entsprechend einer vorgegebenen Korrekturfunktion zu dem Durchschnittspegel auf der Basis der Durchschnittshelligkeit des Eingangs-Bildes addiert, und wobei die Abbildungseinrichtung (316, 318) so ausgeführt ist, dass sie jeden Eingangs-Abtastwert jedes der Unterbilder, die von dem Bildspeicher (300) ausgegeben werden, auf einer Vielzahl von Graustufen auf der Basis der kumulativen Dichtefunktionen und des kompensierten Durchschnittspegels abbildet.

17. Schaltung nach Anspruch 10 oder 11, die des Weiteren eine Kompensationseinrichtung (414) umfasst, die einen kompensierten Durchschnittspegel berechnet, indem sie einen Helligkeitskompensationswert entsprechend einer vorgegebenen Korrekturfunktion zu dem Durchschnittspegel auf der Grundlage der Durchschnittshelligkeit des Eingangs-Bildes addiert, und wobei die Abbildungseinrichtung (416, 418) so ausgeführt ist, dass sie jeden Eingangs-Abtastwert jedes der Unterbilder auf einer Vielzahl von Graustufen auf der Basis der kumulativen Dichtefunktionen und des kompensierten Durchschnittspegels abbildet.

18. Schaltung nach Anspruch 16 oder 17, wobei die Abbildungseinrichtung (316, 318; 416, 418) umfasst:

eine erste Abbildungseinheit (316; 416), die den Eingangs-Abtastwert auf einer Graustufe von einem Minimalpegel $X_o$ zu einem kompensierten Durchschnittspegel $B_m$ entsprechend einer ersten Transformationsfunktion abbildet, die mittels der kumulativen Dichtefunktionen definiert wird; und

eine zweite Abbildungseinheit (318; 418), die den Eingangs-Abtastwert auf einer Graustufe von $B_m'$ zu einem Maximalpegel $X_{L-1}$ entsprechend einer zweiten Transformationsfunktion abbildet, die mittels der anderen der kumulativen Dichtefunktionen definiert wird, wobei $B_m' = B_m + X_{L-1} / (L-1)$.

19. Schaltung nach Anspruch 16 oder 17, wobei die Kompensationseinrichtung (314; 414) einen Helligkeitskompensationswert, der größer ist als Null, zu dem Durchschnittspegel addiert, wenn der Durchschnittspegel unter einem ersten Schwellenwert liegt, und einen Helligkeitskompensationswert, der kleiner ist als Null, zu dem Durchschnittspegel addiert, wenn der Durchschnittspegel über einem zweiten Schwellenwert liegt.

20. Schaltung nach Anspruch 14, wenn abhängig von Anspruch 12, oder Anspruch 18, wenn abhängig von Anspruch 16, wobei die Ausgabeeinrichtung umfasst:

einen Komparator (118; 320), der den Durchschnittspegel mit dem Eingangs-Abtastwert von dem Bildspeicher (100; 300) vergleicht, um ein Auswähl-Steuersignal auszugeben; und

einen Selektor (120; 322), der einen der Ausgangspegel von der ersten (144; 316) und der zweiten (116; 318) Abbildungseinheit entsprechend dem Auswähl-Steuersignal auswählt.

21. Schaltung nach Anspruch 18, wenn abhängig von Anspruch 17, wobei die Ausgabeeinrichtung (420, 422) umfasst:

einen Komparator (420), der den Durchschnittspegel mit dem Eingangs-Abtastwert vergleicht, um ein Auswähl-Steuersignal auszugeben; und

einen Selektor (422), der einen der Ausgangspegel von der ersten und der zweiten Abbildungseinheit (416, 418) entsprechend dem Auswähl-Steuersignal auswählt.

22. Schaltung zum Verbessern von Bildern nach einem der Ansprüche 10 bis 21, die des Weiteren einen Zwischenspeicher (112; 212; 312; 412) umfasst, der die kumulativen Dichtefunktionen, die von der dritten Berechnungseinrichtung (106-110; 206-210; 306-310; 406-410) berechnet werden, speichert, die gespeicherten Funktionen mit einer Bildeinheit aktualisiert und der Abbildungseinrichtung eine vorgegebene Anzahl von kumulativen Dichtefunktionswerten zuführt.

23. Verfahren bzw. Schaltung nach einem der Ansprüche 1 - 22, wobei die Einheit eines Bildes ein Einzelbild oder ein Teilbild ist.

**EP 0 794 514 B1**

**Revendications**

1. Procédé pour améliorer une image en effectuant une égalisation d'histogramme d'un signal d'image représenté par un nombre prédéterminé de niveaux de gris, ledit procédé comportant les étapes consistant à :

   (a) calculer une valeur de niveau moyen d'un signal d'image d'entrée dans une unité d'image,
   (b) diviser le signal d'image d'entrée en un nombre prédéterminé d'images secondaires sur la base d'un résultat de comparaison du niveau moyen et d'un niveau de gris de chaque échantillon du signal d'image d'entrée,
   (c) calculer les fonctions de densité cumulée pour chaque image secondaire, et
   (d) effectuer une égalisation d'histogramme de chaque image secondaire d'une manière indépendante en mappant chaque échantillon de l'image secondaire en un nouveau niveau de gris sur la base des fonctions de densité cumulée.

2. Procédé pour améliorer une image selon la revendication 1, dans lequel le signal d'image d'entrée est divisé en deux images secondaires à ladite étape (b).

3. Procédé pour améliorer une image selon la revendication 1 ou 2, dans lequel ladite étape (d) comporte les étapes consistant à :

   (d1) mapper l'échantillon d'entrée en un niveau de gris d'une première plage en utilisant une première fonction de transformation qui est définie par l'utilisation de l'une des fonctions de densité cumulée,
   (d2) mapper l'échantillon d'entrée en un niveau de gris d'une seconde plage en utilisant une seconde fonction de transformation qui est définie par l'utilisation d'une autre fonction parmi les fonctions de densité cumulée,
   (d3) comparer l'échantillon d'entrée au niveau moyen, et
   (d4) sélectionner l'un des deux niveaux de gris mappés auxdites étapes (d1) et (d2), respectivement, suivant le résultat de ladite étape (d3).

4. Procédé selon la revendication 1, 2 ou 3, dans lequel on fournit en outre une étape (a1) comportant l'obtention d'une distribution de niveaux de gris du signal d'image d'entrée dans une unité d'image, et dans lequel ladite étape (c) est réalisée sur la base de la distribution de niveaux de gris.

5. Procédé selon la revendication 4, dans lequel la première plage de ladite étape (d1) comporte des niveaux de gris compris entre un niveau minimal $X_0$ et un niveau moyen $X_m$ et la seconde plage de ladite étape (d2) comporte des niveaux de gris compris entre le niveau de gris situé après le niveau moyen $X_{m+1}$ et le niveau maximal $X_{L-1}$.

6. Procédé selon la revendication 4, dans lequel :

   un niveau moyen compensé est obtenu en ajoutant une valeur de compensation de luminosité conformément à une fonction de correction prédéterminée sur la base de la luminosité moyenne de l'image d'entrée audit niveau moyen, et
   à ladite étape (d) d'égalisation d'histogramme, chaque image secondaire subit une égalisation d'histogramme d'une manière indépendante en mappant chaque échantillon de l'image secondaire en un nouveau niveau de gris sur la base des fonctions de densité cumulée et du niveau moyen compensé.

7. Procédé pour améliorer une image selon la revendication 6, dans lequel la distribution de niveaux de gris est divisée en deux images secondaires conformément au niveau moyen dans ladite étape (b).

8. Procédé pour améliorer une image selon la revendication 7, dans lequel ladite étape (d) comporte les étapes consistant à :

   (d1) mapper l'échantillon d'entrée qui est inférieur ou égal au niveau moyen en un niveau de gris compris entre le niveau minimal $X_0$ et un niveau moyen compensé $B_m$ conformément à une valeur de la fonction de densité cumulée correspondante de l'échantillon d'entrée,
   (d2) mapper le signal d'image d'entrée qui est supérieur au niveau moyen en un niveau de gris compris entre $B_m'$ et un niveau de gris maximal $X_{L-1}$ conformément à une valeur de la fonction de densité cumulée correspondante de l'échantillon d'entrée, où $B_m' = B_m + X_{L-1}/(L-1)$.

9. Procédé pour améliorer une image selon la revendication 6, dans lequel, dans l'obtention dudit niveau moyen

**15**

compensé, la valeur de compensation de luminosité est supérieure à zéro lorsque le niveau moyen est inférieur à un premier seuil, et la valeur de compensation de luminosité est inférieure à zéro lorsque le niveau moyen est supérieur à un second seuil.

**10.** Circuit pour améliorer une image par l'égalisation d'histogramme d'un signal d'image représenté par un nombre prédéterminé de niveaux de gris, le circuit comportant :

des premiers moyens de calcul (102 ; 202 ; 302 ; 402) pour calculer une distribution de niveaux de gris d'un signal d'image d'entrée dans une unité d'image,

des deuxièmes moyens de calcul (104 ; 204 ; 304 ; 404) pour calculer un niveau moyen du signal d'image d'entrée dans une unité d'image,

des troisièmes moyens de calcul (106 à 112 ; 206 à 212 ; 306 à 312 ; 406 à 412) pour diviser la distribution de niveaux de gris en un nombre prédéterminé d'images secondaires sur la base d'un résultat de comparaison du niveau moyen et d'un niveau de gris de chaque échantillon du signal d'image d'entrée,

des moyens de mappage (114, 116 ; 214, 216 ; 316, 318 ; 416, 418) pour mapper chaque échantillon d'entrée de chacune des images secondaires en une pluralité de niveaux de gris sur la base des fonctions de densité cumulée, et

des moyens de sortie (118, 120 ; 218, 220 ; 320, 322 ; 420, 422) pour comparer l'échantillon d'entrée au niveau moyen et sélectionner l'un des niveaux de gris mappés délivrés en sortie par lesdits moyens de mappage pour délivrer en sortie le niveau sélectionné.

**11.** Circuit pour améliorer une image selon la revendication 10, dans lequel une unité d'image est une image complète et un nombre prédéterminé est égal à deux.

**12.** Circuit selon la revendication 10 ou 11, dans lequel on fournit en outre une mémoire d'images (100, 300) pour retarder le signal d'image d'entrée d'une unité d'image et dans lequel lesdits moyens de mappage (114, 116 ; 316, 318) mappent chaque échantillon d'entrée de l'image secondaire délivrée par ladite mémoire d'images en une pluralité de niveaux de gris sur la base des fonctions de densité cumulée.

**13.** Circuit selon la revendication 10 ou 11, dans lequel lesdits moyens de mappage (214, 216) sont conçus pour mapper chaque échantillon d'entrée de chaque image secondaire en une pluralité de niveaux de gris sur la base des fonctions de densité cumulée calculées pour l'image juste avant l'image courante.

**14.** Circuit pour améliorer des images selon la revendication 12 ou 13, dans lequel lesdits moyens de mappage (114, 116 ; 214, 216) comportent :

un premier dispositif de mappage (114 ; 214) pour mapper l'échantillon d'entrée en un niveau de gris compris entre un niveau minimal $X_0$ et un niveau moyen $X_m$ en utilisant une première fonction de transformation qui est définie par l'utilisation de l'une des fonctions de densité cumulée, et

un second dispositif de mappage (116 ; 216) pour mapper l'échantillon d'entrée en un niveau de gris compris entre un niveau $X_{m+1}$ se trouvant après le niveau moyen et un niveau maximal $X_{L-1}$ en utilisant une seconde fonction de transformation qui est définie par l'utilisation de l'autre fonction parmi les fonctions de densité cumulée.

**15.** Circuit selon la revendication 14 lorsqu'elle dépend de la revendication 15, dans lequel lesdits moyens de sortie (218, 220) comportent :

un comparateur (218) pour comparer l'échantillon d'entrée au niveau moyen pour délivrer en sortie un signal de commande de sélection, et

un sélecteur (220) pour sélectionner l'un des niveaux de sortie provenant desdits premier et second dispositifs de mappage (214, 216) suivant le signal de commande de sélection.

**16.** Circuit selon la revendication 12, comportant en outre des moyens de compensation (314) pour calculer un niveau moyen compensé en ajoutant une valeur de compensation de luminosité conformément à une fonction de correction prédéterminée au niveau moyen sur la base de la luminosité moyenne de l'image d'entrée et dans lequel lesdits moyens de mappage (316, 318) sont conçus pour mapper chaque échantillon d'entrée de chacune des images secondaires délivrées en sortie par la mémoire d'images (300) en une pluralité de niveaux de gris sur la base des fonctions de densité cumulée et du niveau moyen compensé.

**17.** Circuit selon la revendication 10 ou 11, comportant en outre des moyens de compensation (414) pour calculer un niveau moyen compensé en ajoutant une valeur de compensation de luminosité conformément à une fonction de correction prédéterminée au niveau moyen sur la base de la luminosité moyenne de l'image d'entrée, et dans lequel lesdits moyens de mappage (416, 418) sont conçus pour mapper chaque échantillon d'entrée de chacune des images secondaires en une pluralité de niveaux de gris sur la base des fonctions de densité cumulée et du niveau moyen compensé.

**18.** Circuit selon la revendication 16 ou 17, dans lequel lesdits moyens de mappage (316, 318 ; 416, 418) comportent :

un premier dispositif de mappage (316 ; 416) pour napper l'échantillon d'entrée en un niveau de gris compris entre un niveau minimal $X_0$ et un niveau moyen compensé $B_m$ conformément à une première fonction de transformation qui est définie par l'utilisation de l'une des fonctions de densité cumulée, et
un second dispositif de mappage (318 ; 418) pour mapper l'échantillon d'entrée en un niveau de gris compris entre $B_m$' et un niveau maximal $X_{L-1}$ conformément à une seconde fonction de transformation qui est définie par l'utilisation de l'autre fonction parmi les fonctions de densité cumulée, où $B_m$' = $B_m$ + $X_{L-1}$/(L-1).

**19.** Circuit selon la revendication 16 ou 17, dans lequel lesdits moyens de compensation (314 ; 414) ajoutent une valeur de compensation de luminosité qui est supérieure à zéro au niveau moyen lorsque le niveau moyen est inférieur à un premier seuil, et une valeur de compensation de luminosité qui est inférieure à zéro au niveau moyen lorsque le niveau moyen est supérieur à un second seuil.

**20.** Circuit selon la revendication 14, lorsqu'elle dépend de la revendication 12 ou de la revendication 18 lorsqu'elle dépend de la revendication 16, dans lequel lesdits moyens de sortie comportent :

un comparateur (118 ; 320) pour comparer le niveau moyen à l'échantillon d'entrée provenant de ladite mémoire d'images (100 ; 300) pour délivrer en sortie un signal de commande de sélection, et
un sélecteur (120 ; 322) pour sélectionner l'un des niveaux de sortie provenant desdits premier (144 ; 316) et second (116 ; 318) dispositifs de mappage en fonction du signal de commande de sélection.

**21.** Circuit selon la revendication 18, lorsqu'elle dépend de la revendication 17, dans lequel lesdits moyens de sortie (420, 422) comportent :

un comparateur (420) pour comparer le niveau moyen à l'échantillon d'entrée pour délivrer en sortie un signal de commande de sélection, et
un sélecteur (422) pour sélectionner l'un des niveaux de sortie provenant desdits premier et second dispositifs de mappage (416, 418) en fonction du signal de commande de sélection.

**22.** Circuit pour améliorer des images selon l'une quelconque des revendications 10 à 21, comportant en outre un tampon (112 ; 212 ; 312 ; 412) pour mémoriser les fonctions de densité cumulée calculées par lesdits troisièmes moyens de calcul (106 à 110 ; 206 à 210 ; 306 à 310 ; 406 à 410), mettre à jour les fonctions mémorisées par une unité d'images, et fournir un nombre prédéterminé de valeurs des fonctions de densité cumulée auxdits moyens de mappage.

**23.** Procédé ou circuit selon l'une quelconque des revendications 1 à 22, dans lequel l'unité d'une image est image complète ou un champ.

# FIG. 1

# FIG. 2

EP 0 794 514 B1

# FIG. 3

FRAME HISTOGRAM CALCULATOR 302

FRAME MEAN CALCULATOR 304

DIVIDER 306

FIRST CDF CALCULATOR 308

SECOND CDF CALCULATOR 310

CDF MEMORY 312

SYNC

BRIGHTNESS COMPENSATOR 314

FRAME MEMORY 300

FIRST MAPPER 316
$c_L(X_k) \rightarrow [0, B_m]$

SECOND MAPPER 318
$c_U(X_k) \rightarrow [B_m', X_{L-1}]$

COMPARATOR 320

SELECTOR 322

$\{X\}$, $X_m$, $p_L(X_k)$, $p_U(X_k)$, $c_L(X_k)$, $c_U(X_k)$, $B_m$, $Y_H$

EP 0 794 514 B1

20

FIG. 4A

FIG. 4B

FIG. 5A

FIG. 5B

# FIG. 6

EP 0 794 514 B1